# EUROPEAN PATENT SPECIFICATION

(11) **EP 0 867 076 B1**
(45) Date of publication and mention of the grant of the patent: **13.10.1999**
(21) Application number: 96940004.3
(22) Date of filing: 28.11.1996
(51) Int. Cl.: H04B 1/18, H04N 5/775

(54) **IMPROVEMENTS RELATING TO THE PROCESSING OF BROADCASTING SIGNALS**
VERBESSERUNGEN BEI RUNDFUNKSIGNALBEHANDLUNG
AMELIORATIONS RELATIVES AU TRAITEMENT DE SIGNAUX DE RADIODIFFUSION

(30) Priority: 15.12.1995 GB 9525721
(43) Date of publication of application: 30.09.1998
(73) Proprietor: Pace Micro Technology Ltd, Saltaire, Shipley BD18 3LF (GB)
(72) Inventor: COE, Peter, Shipley BD18 3LF (GB)
(74) Representative: Denmark, James
(86) International application number: GB9602930
(87) International publication number: WO9723052

(56) References cited:
- EP-A- 0 590 976
- EP-A- 0 677 963
- US-A- 4 969 050

## Description

This invention relates to the processing of broadcasting signals, in particular those signals which are used for the transmission of television broadcasts.

Signals can be broadcast in several ways, namely terrestrially, via satellite and by cable, and although we devised the present invention for terrestrial broadcasting, it can be applied to the other forms of broadcasting mentioned above. Indeed, it can be applied to radio broadcasting.

At least as concerns terrestrial broadcasting, signals which are used for the broadcasting of TV programmes are allocated a "channel" of a frequency or narrow range of frequencies over which the programmes are broadcast, so that different signals for different channels do not interfere with each other. However, as the number of channels increases, so the availability of frequencies reduces. Also, some frequencies are taken up by new forms of equipment, such as domestic video recorders, video cameras, TV games, cable and satellite set top boxes etc., hereinafter called "TV appliances". Specifically, these TV appliances have used what is known in the United Kingdom as channels 35 to 38 inclusive as the default or factory pre-set frequency range. Channels 35 to 38 have a frequency range of 583-614 MHz.

It has recently been announced in the United Kingdom that the new recently awarded TV station "Channel 5" hereinafter called C5, will be broadcast on channel 37, 598-606 MHz. Unless steps are taken, there may be a problem with interference between the broadcasting of the new C5 TV programmes on channel 37 and the TV appliances set to the same or adjacent channel. The potential interference is caused by:
1.1 The nature of TV appliances double side band modulation RF output overlap with the Channel Five signal
1.2 Frequency, accuracy and stability of TV appliance RF output
1.3 Spectral purity of the TV appliance RF output
1.4 Ability of the TV to filter adjacent channel RF frequencies.

This interference was recognised and consequently, a condition of the award of the new TV station was that the C5 TV company had the responsibility to deal with the problem. One option open to the C5 TV company is to re-tune each TV appliance in every home which will receive the C5 transmission on channel 37. Clearly this is a massive exercise and will take a long time to complete. Also, if the re-tuning is not done correctly, there may still be interference. Also, there may be new forms of interference even if the re-tuning is carried out correctly. In addition, there is an issue of legal liability and responsibility for any damage to TV appliances resulting from work done by the C5 company representatives. The Channel Five transmission licensee has to provide a free of charge solution to the TV consumer, and as the TV appliance industry is not intending to change the present factory pre-set frequency range, the tuning team may be required for a long period.

Other solutions exist such as providing all consumers with a filter which they could place in line with their TV aerial thereby removing the Channel 5 Transmissions before they are applied to the consumer's TV appliance. This, however deprives the consumer of the channel 5 signal, reduces the potential viewing audience and in turn reduces revenue from advertising.

European Patent EP-A-0 677 963 discloses an arrangement for the channel conversion of frequency ranges received by a receiving installation from at least one satellite. The frequency ranges are converted to IF (intermediate frequency) state, and then the ranges are distributed by a splitting distributor so that the whole of the frequency ranges is applied to each of a number of identical channel converters, corresponding to the number of identical channel converters, corresponding to the number of channels received from the satellite. In each converter, all but a signal of desired frequency are filtered out. Each converter receives all of the satellite channel frequencies, and each filters out all but at desired frequency, so that the outputs of the converters are different from each other.

The apparatus therefore achieves its object which is to provide an arrangement whereby the channel conversion of frequency ranges can take place.

The objective of the prior invention is however different from that of the present invention, which is to extract one signal, for example for a specific channel, and to frequency shift that signal and then mix it with the other signals, which need not be otherwise processed, so that the frequency shifted channel will not cause interference with the other signals in an operation apparatus.

The present invention proposes an alternative solution to the above problem and provides one which is perhaps more convenient and is less expensive to both the householder (that is the TV appliance holder/owner) and in the above example, the C5 TV company.

According to the invention there is provided a method of processing electrical signals to be fed to a receiving apparatus wherein a number of signals of different frequencies or frequency ranges are processed so that at least one signal (the unwanted signal(s)) is or are intercepted and removed temporarily from the other signals, and when it or they is or are so removed, the frequency or frequencies thereof is or are shifted to render the signal(s) more convenient for receipt by the receiving apparatus, and the shifted frequency signal or signals is or are summed with the other signals and the summed signals are fed to a single input of the receiving apparatus.

Also according to the invention there is provided equipment for processing electrical signals to be fed to a receiving apparatus wherein a number of signals of different frequencies or frequency ranges are processed, comprising means for intercepting and removing at least one signal (the unwanted signal(s) from the other signals, means for shifting the frequency or frequencies of the unwanted signal(s) to render such signal(s) more convenient for receipt by the receiving apparatus, and summing means for summing the shifted frequency signal or signals with the other signals to provide summed signals which can be fed to a single input of the receiving apparatus.

By this means, the interference referred to herein is avoided in a particularly simple and effective way.

In the previous example given, the said apparatus are TV appliances and the unwanted signal is one which is broadcast on channel 37.

The said means for interception preferably is a filter with duplexer function and inclusive of optional amplification, one side of which contains a Band Stop Response and the other side of which contains a Band Pass Response, the responses being centred on the frequencies of the TV channel or other signal to be shifted. In the example, the said means is arranged to receive signals in the frequency range 462 to 860 MHz, and of these, the Band Pass response allows only signals in the channel 37 range to pass, whilst the Band Stop response stops only the channel 37 signals from passing.

The means for shifting is by single or dual frequency conversion. For single conversion, an oscillator whose frequency can be selected to be higher (preferred) or lower than the unwanted frequency(s) as required or convenient. For dual conversion, two oscillators are required, namely a first to shift the unwanted signal to an intermediate frequency and a second to shift the unwanted signal (now at the intermediate frequency) to a frequency as required or more convenient. The oscillator or second oscillator signal is mixed with the unwanted frequency(s) or intermediate frequency(s) and a selected product signal then summed with the signals from the Band Stop Response, the output being then fed to the TV appliances. Filtering of the mixer output is required in the normal manner in order to select the required output frequency and to reject unwanted products which might otherwise cause interference themselves with frequencies of the Band Stop output.

Preferably, the frequency of the or each local oscillator can be adjusted (tuned) to any of a number of different frequencies, thereby providing a range of new frequencies for the original unwanted frequency.

In the example, the oscillator frequency may be set lower than channel 37 by a value so that the selected mixer output product shifts the channel 37 signal to channel 69.

In the example, the device can be inserted in the TV appliance aerial cable quite simply and quickly. In effect, the C5 channel 37 signal is intercepted, and then shifted to another frequency, before being transmitted to the TV appliances, and interference with the TV appliances by channel 37 signals is conveniently avoided. Put simply, the conversion can be achieved simply by the connection of a unit including a filter with duplexer function, mixer(s) and an oscillator(s), housed in a suitable case for example of plastic, and incorporating either mains supply, plug and lead to mains supply interface, and connectable to the aerial socket box of the domestic dwelling in which it is to be used.

Specific examples are given herein but it is to be understood that the invention has general application to any broadcast signal that requires to be shifted away from its original received frequency.

The specific examples are now given with reference to the accompanying diagrammatic drawings, wherein;-
Fig. 1 shows how the device of the invention is installed in a domestic dwelling which receives terrestrial TV signals.
Fig. 2 and 3 are diagrams showing how signals are shifted in accordance with the embodiment of the invention;
Fig. 4 indicates the components of one form of frequency shifter;
Fig. 4A shows similar to Fig. 4, another form of frequency shifter; and
Fig. 5 shows one structural form of the shifter device of Fig 4 or 4A.

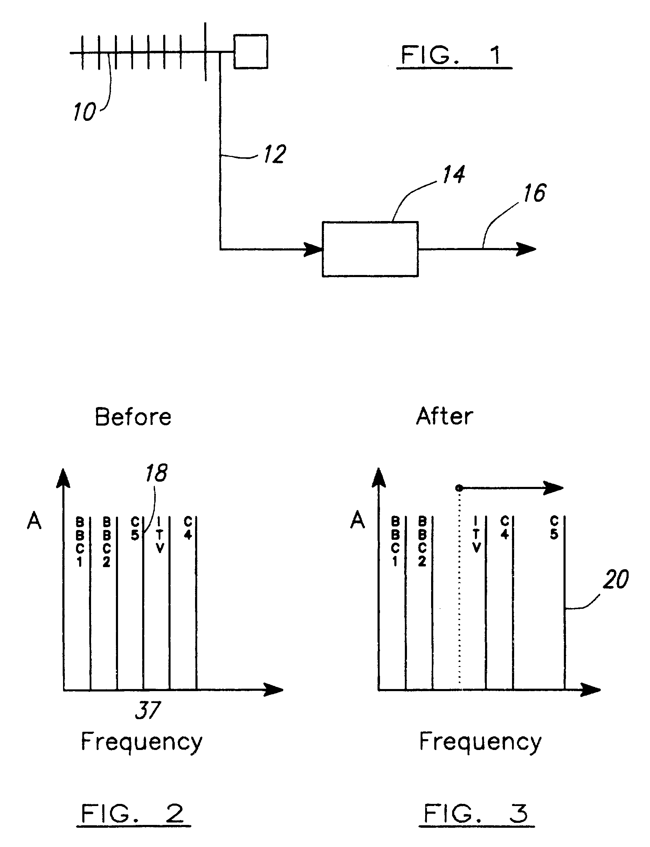

Referring to the drawings, in Fig. 1, a domestic aerial is indicated by the numeral 10 and it is connected to a coaxial cable 12 in conventional manner. The cable 12 normally passes directly to the TV or TV appliance (VCR etc.), but in accordance with the invention, it passes to a channel shifter device 14, and a second coaxial cable 16 passes directly from the device 14 to the TV or TV appliance. All incoming signals therefore pass through the device 14.

The purpose of the device 14 is as explained herein to shift the frequency, in this example, of the C5 TV signals which are on channel 37 (598 to 606 MHz). Figs. 2 and 3 shows this effect and these show the C5 signal position 18 before and after passing through the device 14. In Fig. 2 the C5 signal 18 is shown at the channel 37 frequency range indicated above, whilst in Fig. 3 it is indicated that the C5 signal has moved to a higher frequency as at 20 (it can be moved to a lower frequency) to avoid the interference as described herein.

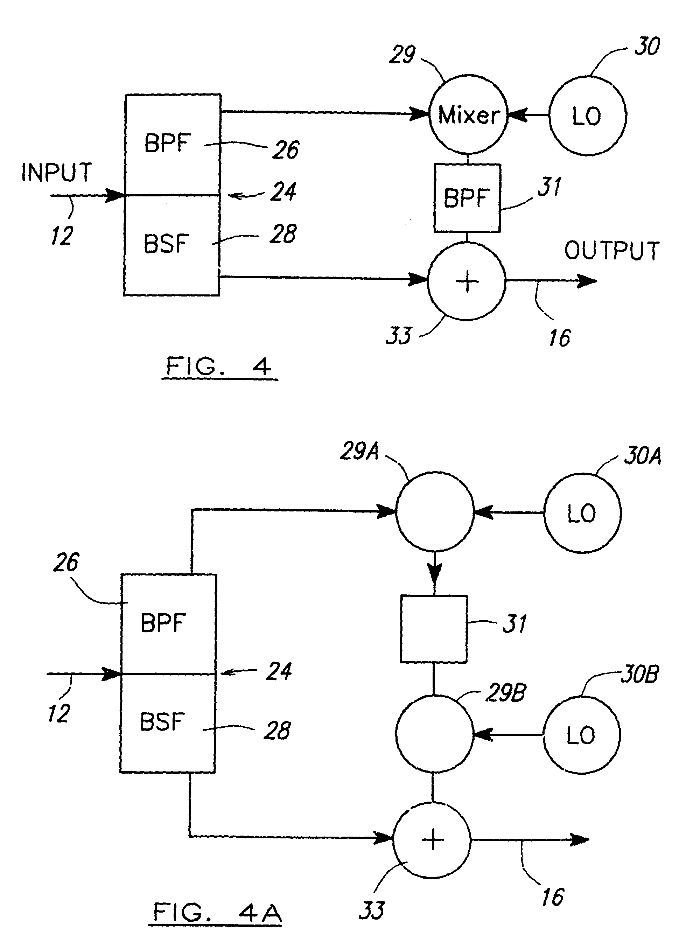

This is achieved by the device 14 of which the components of one embodiment are indicated in Fig. 4 whilst the components of another embodiment are shown in Fig. 4A.

The device of Fig. 4 includes a filter 24 with duplexer function and inclusive of optional amplification, which receives the input after amplification from the cable 12. The signals of C5 only are passed through the Band Pass (BPF) response side of the filter 24 as at 26 and the remaining signals are passed through the Band Stop (BSF) response side of the filter 24 as at 28. The signal at 26 is mixed in mixer 29 with the output signal from an oscillator 30 (LO) of the device 14, and the resulting product signal filtered using Band Pass filter 31 also included in the device 14. The output signal(s) of 31 are then summed in a summer 33 with all of the output signals 28 from the Band Stop response side of the filter 24, and the resultant signals are then outputted to the TV appliances on cable 16. As stated herein, the oscillator 30 can be set (tuned) by, mechanical means or by electrical means, to shift the signal 18 up or down to any appropriate unused channel, but a specific C5 shifting arrangement example is given below.

| EXAMPLE | Channel 5 shifting | | |
|---|---|---|---|
| BPF | Response | 598-606 MHz | |
| BSF | Response | 598-606 MHz | |
| LO | Frequency | 200-256 MHz | Output higher |
| | | 1068-1132 MHz | Output lower |

With these frequencies, the C5 signal is either shifted to 798-862 MHz (channel 62-69 frequencies) or 462-534 MHz (channel 21-28 frequencies).

As to the arrangement of Fig. 4A in which the same reference numerals have been used to denote parts already described, this device is essentially similar to Fig. 4, except that the frequency shifting is done in two stages, and so there are two mixers 29A, 29B, and two local oscillators 30A, 30B, arranged to opposite sides of the band pass filter 31. The device operates as will be understood in that the unwanted channel frequency(s) are shifted in the mixer 29A firstly to an intermediate frequency(s) and the signal is passed through the filter 31, and then the intermediate frequency(s) are again shifted to the new required or convenient channel frequency(s).

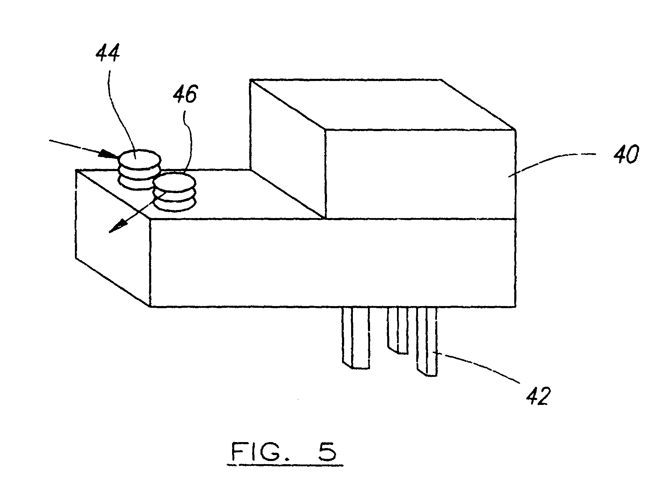

Finally, Fig. 5 shows one example of how the device can be configured. In this example, the device comprises a plastic case 40 having an integral mains plug 42 so that it can be directly plugged into the local supply and it also has two coaxial cable sockets, of which one is an input 44 and the other is an output 46.

To connect the device could not be simpler, in that the installer simply plugs in the device to a mains socket, unplugs the existing coaxial cable from the TV, inserts it in the input socket 44 and then connects an additional coaxial cable (conveniently supplied with the device) from the output socket 46 to the TV aerial connection.

Obviously, this is an installation which could be carried out readily by the householder and no skilled installer would be required. The devices could therefore be supplied through the post. The convenience of installation compared with the intended method involving re-tuning is considerable.

In another example, the plug for the mains is separated from the device by a length of cable for instances where the nearest power point is not sufficiently close to the TV aerial.

## Claims

1. A method of processing electrical signals to be fed to a receiving apparatus wherein a number of signals of different frequencies or frequency ranges are processed so that at least one unwanted signal (18) is or are intercepted and removed temporarily from the other signals, and when it or they is or are so removed, the frequency or frequencies thereof is or are shifted to render the unwanted signal(s) more convenient for receipt by the receiving apparatus, and the shifted frequency signal or signals (20) is or are summed with the other signals and the summed signals are fed to a single input (16) of the receiving apparatus, characterised by the use of a band stop/band pass filter (24) which receives said number of signals and splits them into said at least one unwanted signal (18) which is passed through the band pass response side (26) of the filter (24), and the other signals which are passed through the band stop side (28) of the filter (24), and are subsequently summed with the said at least one unwanted signal (20) after the frequency shifting thereof.

2. Equipment for processing electrical signals to be fed to a receiving apparatus wherein a number of signals of different frequencies or frequency ranges are processed, comprising means (24) for intercepting and removing at least one unwanted signal (18) from the other signals, means (29A, 30A, 29B, 30B) for shifting the frequency or frequencies of the unwanted signal(s) (20) to render such signal(s) more convenient for receipt by the receiving apparatus, and summing means (33) for summing the shifted frequency unwanted signal or signals (20) with the other signals to provide summed signals which can be fed to a single input (16) of the receiving apparatus, characterised in that the said means (24) for shifting is a filter having a duplex function, one side (26) of which comprises a band stop response and other side (28) of which comprises a band pass response.

3. Equipment according to Claim 2, wherein the said apparatus is a TV appliance and the unwanted signal is one which is broadcast on channel 35 or 37.

4. Equipment according to Claim 2 or 3 the responses of the band stop/band pass filter are centred on the frequencies of the TV channel or other signal to be shifted.

5. Equipment according to Claim 4, wherein the said filter means (24) is arranged to receive signals in the frequency tange 470 to 860 MHz, and of these, the Band Pass response allows only signals in the channel 35 or 37 range to pass, whilst the Band Stop response stops only the channel 35 or 37 signals from passing.

6. Equipment according to Claim 5, wherein the means (29A, 30A, 29B, 30B) for shifting is one or more oscillators (30A, 30B) whose frequency can be selected to be higher or lower than the unwanted frequency(s) and the oscillator signal is mixed with the unwanted signal(s) and a selected product signal then summed with the signals from the Band Stop response.

7. Equipment according to Claim 6, including a filter (31) connected to the output of the mixer (29A).

8. Equipment according to any of Claims 2 to 7 wherein the equipment comprises a plug means (40) for connection to the mains, an input (16) for connection to a TV appliance and an input (12) for a television aerial (10).

## Patentansprüche

1. Verfahren zum Bearbeiten elektrischer Signale, die in ein Empfangsgerät gespeist werden sollen, wobei eine Anzahl von Signalen unterschiedlicher Frequenzen oder Frequenzbereiche bearbeitet wird, so daß wenigstens ein Signal (18) abgefangen und vorübergehend von den übrigen Signalen entfernt wird, und nach seiner derartigen Entfernung wird/werden dessen Frequenz oder Frequenzen verschoben, um das/die Signal(e) geeigneter für den Empfang durch das Empfangsgerät zu machen, und das/die Signal(e) (20) mit der verschobenen Frequenz wird/werden mit den übrigen Signalen summiert, und die summierten Signale werden in einen einzelnen Eingang (16) des Empfangsgerätes gespeist, gekennzeichnet durch die Verwendung eines Bandstop/Bandpaß-Filters (24), das die genannte Anzahl von Signalen empfängt und sie in das genannte wenigstens eine unerwünschte Signal (18), das durch die Bandpaßseite (26) des Filters (24) gelassen wird, und die übrigen Signale unterteilt, die durch die Bandstoppseite (28) des Filters (24) gelassen werden, und werden nachfolgend mit dem genannten wenigstens einen unerwünschten Signal (20) nach seiner Frequenzverschiebung summiert.

2. Vorrichtung zur Bearbeitung elektrischer Signale, die in ein Empfangsgerät gespeist werden sollen, wobei eine Anzahl von Signalen unterschiedlicher Frequenzen oder Frequenzbereiche bearbeitet wird, umfassend ein Mittel (24) zum Abfangen und Entfernen von wenigstens einem unerwünschten Signal (18) von den übrigen Signalen, ein Mittel (29A, 30A, 29B, 30B) zum Verschieben der Frequenz(en) des/der unerwünschten Signals/e (20), um (ein) solche(s) Signal(e) geeigneter für den Empfang durch das Empfangsgerät zu machen, und ein Summierungsmittel (33) zum Summieren des/der Signals/e (20) mit verschobener Frequenz mit den übrigen Sigalen, um summierte Signale zu erzeugen, die in einen einzelnen Eingang (16) des Empfangsgerätes gespeist werden können, dadurch gekennzeichnet, daß das genannte Verschiebungsmittel (24) ein Filter mit Duplexfunktion ist, dessen eine Seite (26) ein Bandstop-Ansprechverhalten und dessen andere Seite (28) ein Bandpaß-Ansprechverhalten hat.

3. Vorrichtung nach Anspruch 2, bei dem die genannte Apparatur ein TV-Gerät ist und bei dem das unerwünschte Signal ein Signal ist, das auf Kanal 35 oder 37 gesendet wird.

4. Vorrichtung nach Anspruch 2 oder 3, bei dem die Ansprechverhalten des Bandstop/Bandpaß-Filters auf den zu verschiebenden Frequenzen des TV-Kanals oder des anderen Signals zentriert sind.

5. Vorrichtung nach Anspruch 4, bei dem das genannte Filtermittel (24) so angeordnet ist, daß es Signale im Frequenzbereich von 470 bis 860 MHz empfängt, und von diesen läßt das Bandpaß-Ansprechverhalten nur Signale im Bereich von Kanal 35 oder 37 durch, während das Bandstop-Ansprechverhalten nur die Signale von Kanal 35 oder 37 stoppt.

6. Vorrichtung nach Anspruch 5, wobei es sich bei dem Verschiebungsmittel (29A, 30A, 29B, 30B) um einen oder mehrere Oszillatoren (30A, 30B) handelt, deren Frequenz so gewählt werden kann, daß sie höher oder niedriger ist als die unerwünschte(n) Frequenz(en), und das Oszillatorsignal mit dem/den unerwünschten Signal(en) gemischt wird, und ein gewähltes Produktsignal dann mit den Signalen vom Bandstop-Ansprechverhalten summiert wird.

7. Vorrichtung nach Anspruch 6, mit einem Filter (31), das an den Ausgang des Mischers (29A) angeschlossen ist.

8. Vorrichtung nach einem der Ansprüche 2 bis 7, die einen Stecker (40) für den Netzanschluß, einen Eingang (16) für den Anschluß an ein TV-Gerät und einen Eingang (12) für eine Fernsehantenne (10) umfaßt.

## Revendications

1. Un procédé de traitement de signaux électriques destinés à être acheminés à un appareil récepteur, dans lequel un certain nombre de signaux de différentes fréquences ou gammes de fréquences sont traités, de sorte qu'au moins un signal parasite (18) est, ou sont, intercepté(s) et enlevé(s) temporairement des autres signaux, et quand il(s) est(sont) enlevé(s), la fréquence ou les fréquences de celui-ci, ou de ceux-ci, est(sont) décalée(s) afin de rendre le signal, ou les signaux, parasite(s) plus apte(s) à la réception par l'appareil récepteur, et le signal ou les signaux à fréquence décalée (20) est(sont) ajouté(s) aux autres signaux, et la sommation des signaux est acheminée sur une seule entrée (16) de l'appareil récepteur, caractérisé par l'utilisation d'un filtre coupe-bande/d'un filtre passe-bande (24) qui reçoit ledit nombre de signaux et répartit ceux-ci pour obtenir au moins ledit signal parasite (18), qui passe par le côté réponse en passe-bande (26) du filtre (24), et les autres signaux qui sont passés par le côté coupe-bande (28) du filtre (24), et qui sont ensuite sommés avec ledit signal parasite (20) au moins, après le décalage de fréquence de celui-ci.

2. Un équipement de traitement de signaux électriques destinés à être acheminés à un appareil récepteur, dans lequel un certain nombre de signaux de différentes fréquences ou gammes de fréquences sont traités, comprenant un moyen (24) pour intercepter et enlever au moins un signal parasite (18) des autres signaux, des moyens (29A, 30A, 29B, 30B) pour décaler la fréquence ou les fréquences du signal, ou des signaux, parasite(s) (20) afin de rendre un tel signal, ou de tels signaux, plus apte(s) à la réception par l'appareil récepteur, et un moyen de sommation (33) pour faire la somme du signal, ou des signaux, parasite(s) à fréquence décalée (20) avec les autres signaux, afin de fournir des signaux de sommation qui peuvent être acheminés sur une seule entrée (16) de l'appareil récepteur, caractérisé en ce que ledit moyen (24) utilisé pour le décalage, est un filtre ayant une fonction duplex, dont un côté (26) comprend une réponse en coupe-bande et dont l'autre côté (28) comprend une réponse en passe-bande.

3. Un équipement, selon les stipulations de la revendication 2, dans lequel ledit appareil est un téléviseur et le signal parasite est un signal radiodiffusé sur le canal 35 ou 37.

4. Un équipement, selon les stipulations de la revendication 2 ou 3, dans lequel les réponses du filtre coupe-bande/du filtre passe-bande sont centrées sur les fréquences du canal de transmission télévisée ou de toute autre signal devant subir le décalage.

5. Un équipement, selon les stipulations de la revendication 4, dans lequel ledit moyen de filtrage (24) est agencé de manière à recevoir des signaux dans la gamme de fréquences s'étendant entre 470 et 860 MHz, et dans ceux-ci la fonction de réponse en passe-bande autorise uniquement le passage des signaux du canal 35 ou 37, tandis que la fonction de réponse en coupe-bande empêche uniquement le passage des signaux du canal 35 ou 37.

6. Un équipement, selon les stipulations de la revendication 5, dans lequel les moyens (29A, 30A, 29B, 30B) utilisés pour effectuer le décalage sont constitués d'un ou de plusieurs oscillateurs (30A, 30B) dont la fréquence est sélectionnable pour être supérieure ou inférieure à la fréquence, ou aux fréquences, parasite(s), et le signal de l'oscillateur est mélangé au signal, ou aux signaux, parasite(s), puis un signal de produit sélectionné est additionné des signaux provenant de la fonction de réponse en coupe-bande.

7. Un équipement, selon les stipulations de la revendication 6, comportant un filtre (31), qui est relié à la sortie du mélangeur (29A).

8. Un équipement, selon les stipulations de l'une quelconque des revendications 2 à 7, dans lequel l'équipement comporte un moyen de prise (40) permettant la connexion à l'énergie secteur, une entrée (16) permettant la connexion à un téléviseur et une entrée (12) destinée à l'antenne de télévision (10).
